# EUROPÄISCHE PATENTANMELDUNG

(11) **EP 2 130 428 A2**
(43) Veröffentlichungstag der Anmeldung: **09.12.2009**
(21) Anmeldenummer: 09011239.2
(22) Anmeldetag: 09.05.2005
(51) Int. Cl.: A01G 25/16

(54) **Programmierungseinrichtung und Lesegerät für Bewässerungseinrichtungen**

(30) Priorität: 10.05.2004 DE 102004024038
(62) Teilanmeldung aus: 05745167.6
(71) Anmelder: GARDENA Manufacturing GmbH, 89079 Ulm (DE)
(72) Erfinder: Die Erfindernennung liegt noch nicht vor

(57) **Zusammenfassung**

Die Erfindung betrifft ein Lesegerät für eine programmierbare Bewässerungseinrichtung mit einer Sendeeinrichtung (10, 10b) und einer Empfangseinrichtung (11, 11b) zur parallelen optischen Abtastung mehrerer Codieranordnungen einer Programmiereinrichtung. Hierbei weist das Lesegerät, Sendeeinrichtung und/oder als Empfangseinrichtung nur eine einzige Lichtquelle auf.

## Beschreibung

Die Erfindung betrifft ein Lesegerät für eine programmierbare Bewässerungseinrichtung zur Abtastung einer Programmiereinrichtung zur Übertragung von vorgebbaren Benutzereinstellungen, mit zumindest einem Grundkörper, an dem für eine Codierung der Benutzereinstellung zumindest eine individuell einstellbare Codieranordnung vorgesehen ist, die durch das Lesegerät erfassbar ist.

In der AU-B-21728/95 wird eine Bewässerungseinrichtung zur Ansteuerung einer Mehrzahl von Wasserausgabestellen beschrieben, die eine Mehrzahl von elektrisch aktivierbaren Steuerventilen zur Beeinflussung von Wasserströmen aufweist. Die Bewässerungseinrichtung umfasst ein Kartenlesegerät, eine elektronische Schaltung zur Auswertung von Programmierbefehlen und eine damit verbundene, computerbasierte Ansteuereinheit zur Beeinflussung der Steuerventile. In dem Kartenlesegerät sind mehrere Abtasteinrichtungen zur Abtastung einer als Programmierkarte ausgeführten Programmiereinrichtung vorgesehen. Eine Programmierung der Bewässerungseinrichtung erfolgt über die Programmierkarte, die eine Mehrzahl von Programmierfeldern aufweist, die vorgegebenen Programmierbefehlen entsprechen und Codieranordnungen darstellen. Die Programmierfelder können durch Entfernen von vorgestanzten Lochabdeckungen aktiviert werden. Eine Programmierung der Bewässerungseinrichtung findet durch Einschieben der Programmiereinrichtung in das Kartenlesegerät der Bewässerungseinrichtung statt. Dabei werden die Programmierfelder durch die Abtasteinrichtung des Kartenlesegerätes abgetastet und in Programmierbefehle für die Bewässerungseinrichtung umgesetzt. Die Programmierbefehle können dann für eine entsprechende Ansteuerung der Steuerventile benutzt werden.

Die der Erfindung zugrunde liegende Aufgabe besteht darin, ein Lesegerät der eingangs genannten Art zu schaffen, die eine vereinfachte Bedienung und einen vereinfachten Aufbau ermöglichen.

Die der Erfindung zugrunde liegende Aufgabe wird durch ein Lesegerät für eine Bewässerungseinrichtung mit einer Sendeeinrichtung und einer Empfangseinrichtung zur parallelen optischen Abtastung mehrerer Cordieranordnungen einer Programmiereinrichtung gelöst, wobei die Sendeeinrichtung eine einzige Lichtquelle aufweist. Durch den Einsatz einer einzigen Lichtquelle in dem Lesegerät, das insbesondere auf eine elektrische Energieversorgung durch Batterien oder Solarzellen angewiesen ist, kann ein besonders vorteilhafter, geringer Energieverbrauch des Lesegeräts bewirkt werden, da nur Energie für eine einzige Lichtquelle zur Verfügung gestellt werden muss. Unter Kostengesichtspunkten ist bei Vorliegen einer einzigen Lichtquelle eine aufwendigere Gestaltung und/oder Justierung dieser einzigen Lichtquelle möglich, wodurch ein verbessertes Abtastergebnis erzielbar sein kann.

Die der Erfindung zugrunde liegende Aufgabe wird auch durch ein Lesegerät für eine Bewässerungseinrichtung mit einer Sendeeinrichtung und einer Empfangseinrichtung zur parallelen optischen Abtastung mehrerer Cordieranordnungen einer Programmiereinrichtung gelöst, bei der die Empfangseinrichtung einen einzigen Detektor aufweist. Dadurch wird ein positiver Einfluss auf einen Energieverbrauch sowie eine bauliche Vereinfachung des Lesegerätes bewirkt. Der Detektor kann unter Kostengesichtspunkten aufwendiger gestaltet werden, als dies bei einer Mehrzahl von Detektoren möglich wäre. Eine dem Detektor nachgeschaltete Verarbeitung von Detektorsignalen kann ebenfalls vereinfacht ausgeführt werden, da lediglich die Signale des einzigen Detektors übertragen und ausgewertet werden müssen.

In weiterer Ausgestaltung der Erfindung ist für eine parallele Abtastung mehrerer Codieranordnungen zumindest ein optischer Verteiler an der Sende- und/oder Empfangseinrichtung vorgesehen. Der optische Verteiler ermöglicht eine Aufspaltung eines von der Lichtquelle abgestrahlten Lichtbündels in mehrere Lichtstrahlen bzw. eine Zusammenfassung mehrerer Lichtstrahlen zu einem auf den Detektor abzustrahlenden Lichtbündel. Der optische Verteiler ermöglicht daher in Zusammenwirkung mit der einzigen Lichtquelle und/oder dem einzigen Detektor in einfacher Weise eine parallele Abtastung mehrerer Codieranordnungen. Insbesondere bei einem Einsatz jeweils nur einer einzigen Lichtquelle und eines einzigen Detektors kann durch.die Verwendung optischer Verteiler eine signifikante Vereinfachung der elektronischen Ansteuereinrichtungen für die Lichtquelle und Auswerteeinrichtungen für den Detektor sowie eine Erhöhung der Zuverlässigkeit des Lesegerätes bewirkt werden.

In weiterer Ausgestaltung ist der optische Verteiler als Lichtleiteranordnung ausgeführt. Dadurch können einzelne Lichtstrahlen gezielt von einer Eintrittsstelle in den optischen Verteiler bis zu einer Austrittsstelle aus dem optischen Verteiler geführt werden. Die einzelnen Lichtleiter können dabei als diskrete Bauelemente oder als integrale' Bestandteile des optischen Verteilers ausgeführt sein. Durch eine Gestaltung des optischen Verteilers als Lichtleiteranordnung kann insbesondere ein individueller Einfluss auf die in den einzelnen Lichtleitern geführten Lichtstrahlen, insbesondere im Hinblick auf optische Eigenschaften und/oder Laufzeiten im Lichtleiter, genommen werden.

In weiterer Ausgestaltung der Erfindung ist der optische Verteiler als Kunststoffspritzgussteil ausgeführt. Dadurch lässt sich eine besonders einfache Herstellung des optischen Verteilers bewirken, die insbesondere auch eine vorteilhafte Anbindung der Lichtquelle und des Detektors an den optischen Verteiler ermöglicht. Darüber hinaus können insbesondere durch Verwendung von Zwei- oder Mehrkomponentenkunststoffspritzgussverfahren komplexe optische Verteiler mit differenzierten optischen und/oder mechanischen Eigenschaften hergestellt werden, die für eine kostengünstige Produktion in großen Stückzahlen geeignet sind.

In weiterer Ausgestaltung der Erfindung sind Mittel zum sukzessiven Erfassen von individuellen Einstellungen der zumindest einen Codieranordnung abhängig von einer Relativbewegung zwischen der Sende- und Empfangseinrichtung und der Programmiereinrichtung vorgesehen. Durch eine Relativbewegung zwischen der Programmiereinrichtung und der Sende- und Empfangseinrichtung kann eine große Anzahl von Programmierbefehlen, die durch die individuellen Einstellungen der Stellelemente an der Programmiereinrichtung vorgegeben sind und von der Sende- und Empfangseinrichtung des Lesegerätes abgetastet werden, übertragen werden. Durch die Mittel zum sukzessiven Erfassen der individuellen Einstellungen wird eine Zuordnung der Programmierbefehle, die an der Programmiereinrichtung eingestellt sind, zu vorgebbaren Steuerungs- und/oder Regelvorgängen der programmierbaren Bewässerungseinrichtung ermöglicht. Die Mittel zum sukzessiven Erfassen können sowohl hardware- als auch softwareseitig vorgesehen sein.

In weiterer Ausgestaltung der Erfindung sind die Mittel so ausgebildet, dass die Relativbewegung als Entnahmebewegung der Programmiereinrichtung aus dem Lesegerät vorgesehen ist. Bei einer Abtastung der Programmiereinrichtung während einer Entnahmebewegung aus dem Lesegerät ist mit einer hohen Wahrscheinlichkeit sichergestellt, dass eine im Wesentlichen gleichmäßige Relativbewegung vollzogen wird, was eine fehlerfreie Abtastung der Programmiereinrichtung begünstigt. Während bei einer Einschubbewegung der Programmiereinrichtung in das Lesegerät die Gefahr eines Verkantens und damit einer diskontinuierlichen Relativbewegung gegeben ist, kann dies beim Entnehmen der Programmiereinrichtung aus dem Lesegerät nahezu ausgeschlossen werden.

Weitere Vorteile und Merkmale der Erfindung ergeben sich aus den Ansprüchen sowie der nachfolgenden Beschreibung bevorzugter Ausführungsbeispiele, die anhand der Zeichnungen dargestellt sind. Dabei zeigt:
- Fig. 1: eine Vorderansicht einer Programmiereinrichtung mit mehreren Codieranordnungen,
- Fig. 2: eine perspektivische Ansicht einer programmierbaren Bewässerungseinrichtung,
- Fig. 3: eine Rückansicht der programmierbaren Bewässerungseinrichtung gemäß der Fig. 2,
- Fig. 4: ein Blockschaltbild einer programmierbaren Bewässerungseinrichtung gemäß den Fig. 2 und 3 mit einem Lesegerät, einer Auswerteinheit und einer Stelleinrichtung,
- Fig. 5: eine schematische Darstellung des Lesegeräts mit optischen Verteilern gemäß der Fig. 4,
- Fig. 6: in perspektivischer Darstellung ein als Rastschieber ausgeführtes Stellelement der Programmiereinrichtung gemäß Fig. 1,
- Fig. 7: eine schematische Darstellung des Lesegerätes mit einem optischen Verteiler für eine Lichtquelle und mehreren Detektoren.

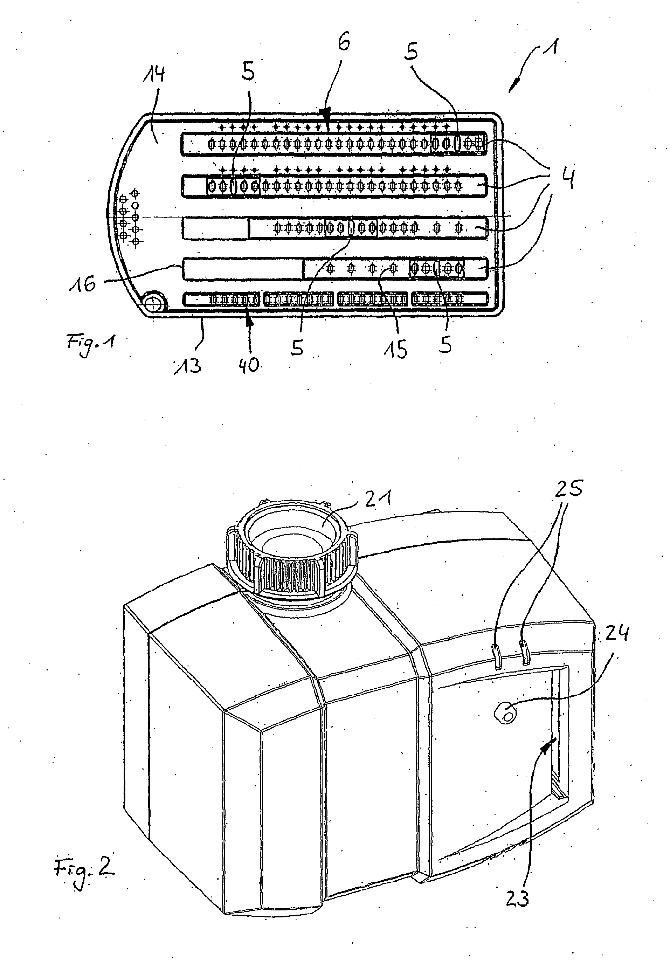

Eine Programmiereinrichtung 1 ist gemäß der Fig. 1 als formstabile, ebene Karte ausgebildet und weist-vier, jeweils parallel zu Seitenkanten 13 ausgerichtete Codieranordnungen 4 sowie eine Referenzspur 40 auf. Die als Linearspuren ausgeführten Codieranordnungen 4 sowie die Referenzspur 40 sind als Abfolge von äquidistant angeordneten Aussparungen 15 im Grundkörper 14 erwirklicht. Die Aussparungen 15 sind als im Wesentlichen stark verrundete, rechteckige Durchbrüche ausgebildet. Jede der Codieranordnungen 4 ist von einem umlaufenden, durch den Grundkörper 14 gebildeten Rahmen 16 umgeben, der zumindest eine, nicht näher dargestellte, beispielsweise als Schwalbenschwanzführung ausgeführte Führungsbahn 6 aufweist. In der Führungsbahn 6 ist jeweils ein Stellelement 5 formschlüssig gehalten und lediglich längs der Codieranordnung 4 verschiebbar angebracht. Alle in Fig. 1 dargestellten Aussparungen 15 der Codieranordnungen 4 sind jeweils orthogonal zu den Seitenkanten 13 auf einer Linie angeordnet. Die Aussparungen 15 der Codieranordnungen 4 sind auf die Aussparungen 15 der Referenzspur 40 ausgerichtet, jeder Aussparung 15 der Codieranordnungen 4 ist eine Aussparung 15 in der Referenzspur 40 zugeordnet.

Durch die Ausgestaltung der Stellelemente 5 und der korrespondierenden Führungsbahn 6 mit einer Schwalbenschwanzführung und den um die Codieranordnungen 4 vorgesehenen Rahmen 16 ist eine unverlierbare Anbringung der Stellelemente 5 an der Programmiereinrichtung 1 gewährleistet, so dass auch bei dem für derartige Einrichtungen zu erwartenden rauen Betrieb eine langfristige Funktion der Programmiereinrichtung gewährleistet werden kann.

Jede der Codieranordnungen 4 repräsentiert einen programmierbaren Parameter der Bewässerungseinrichtung. Bei der in Fig. 1 dargestellten Programmiereinrichtung ist eine Programmierung der aktuellen Uhrzeit, der Uhrzeit für eine Bewässerung, der Dauer der Bewässerung und der Wiederholungsfrequenz der Bewässerung einstellbar. Den Codieranordnungen 4 zugeordnete Skalierungen ermöglichen in intuitiver Weise die Einstellung der vom Benutzer gewünschten Programmierungen.

Eine in Fig. 2 dargestellte Bewässerungseinrichtung 3 weist einen Wasserzulauf 21 auf, an dem ein statischer Wasserdruck angelegt werden kann. Der Wasserzulauf 21 ist mit einem nicht näher dargestellten Steuerventil gekoppelt, das eine Strömung einer zur Verfügung gestellten Wassermenge durch die Bewässerungseinrichtung 3 hindurch gezielt beeinflussen kann. An der Bewässerungseinrichtung 3 ist ein Einsteckschacht 23 für das Einführen der kartenförmigen Programmiereinrichtung vorgesehen. Nahe zu dem Einsteckschacht 21 sind ein Kontrollknopf 24 sowie Kontrollleuchten 25 vorgesehen.

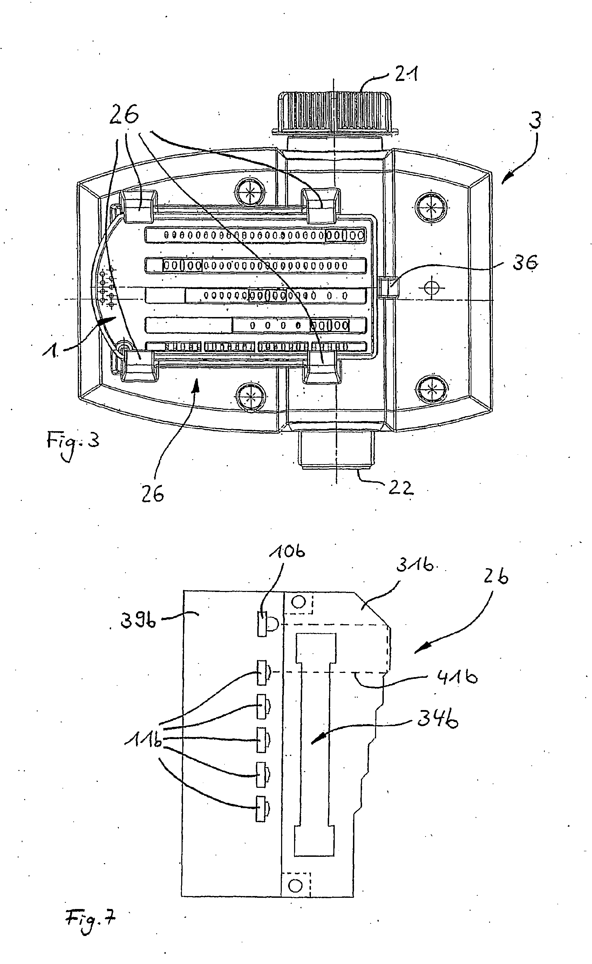

An einer in Fig. 3 dargestellten Rückseite der Bewässerungseinrichtung 3 ist eine Aufnahmehalterung 26 vorgesehen, in die eine Programmiereinrichtung 1 einschiebbar ist, um eine sichere Lagerung während einer Nichtbenutzung zu gewährleisten. Die Aufnahmehalterung 26 weist zu diesem Zweck vier jeweils paarweise gegenüberliegende Haltehaken 35 sowie einen Anschlag 36 auf, die für eine formschlüssige Halterung der Programmiereinrichtung 1 vorgesehen sind. Der Wasserablauf 22, der an einer Unterseite der Bewässerungseinrichtung 3 vorgesehen ist, steht über das nicht dargestellte Steuerventil mit dem Wasserzulauf 21 in beeinflussbarer, zumindest zeitweiliger kommunizierender Verbindung und erlaubt das Abströmen der am Wasserzulauf zur Verfügung gestellten Wassermenge.

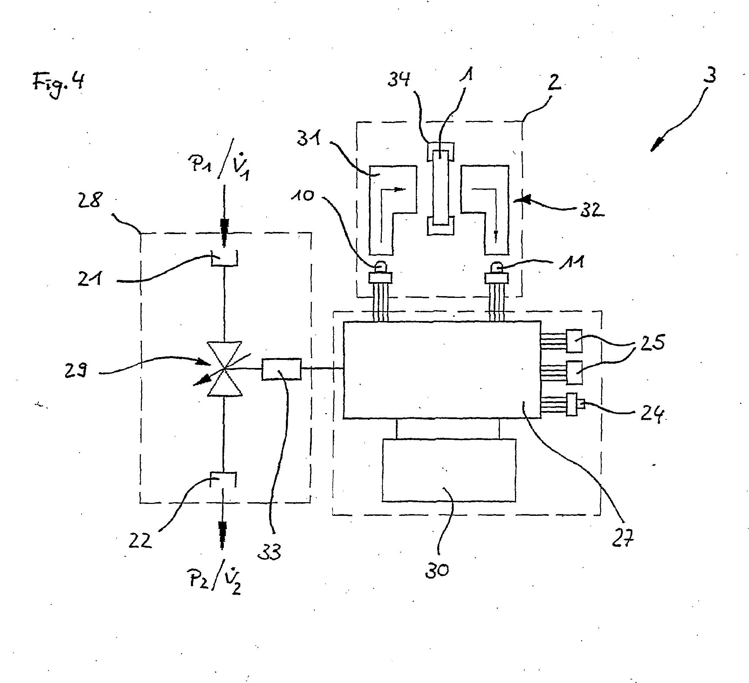

Bei dem in Fig. 4 dargestellten Blockschaltbild ist eine Unterteilung der Bewässerungseinrichtung 3 in drei unterschiedliche Funktionsmodule erkennbar. Das erste Funktionsmodul ist das Lesegerät 2, das für die Abtastung der Programmiereinrichtung 1 vorgesehen ist und das mit dem zweiten Funktionsmodul, der Auswerteeinrichtung 27 verbunden ist. In der Auswerteeinrichtung 27 werden die vom Lesegerät 2 ermittelten, durch die Einstellung der Programmiereinrichtung 1 vorgegebenen Programmierwerte entsprechend einem in der Auswerteeinrichtung 27 abgelegten, vorgegebenen Auswertealgorithmus interpretiert und können dann nachfolgend in Form von Steuerbefehlen an das dritte Funktionsmodul, die Stelleinrichtung 28 weitergegeben werden. Die Stelleinrichtung 28 weist den Wasserzulauf 21 und den über ein Drosselventil 29 zumindest zeitweilig kommunizierend verbundenen Wasserablauf 22 auf. Das Drosselventil 29 ist dabei durch ein elektromechanisches Stellglied 35 ansteuerbar, wobei das Stellglied 35 mit der Auswerteeinrichtung 27 gekoppelt ist. An dem Wasserzulauf 21 liegt bei Ankopplung der Bewässerungseinrichtung 3 an eine entsprechende Wasserzufuhr ein Wasserdruck p₁ an, die Wasserzufuhr kann einen Volumenstrom V₁ zur Verfügung stellen. An dem Wasserablauf 22 kann in Abhängigkeit von der Stellung des Drosselventils 29 ein Wasserdruck p₂ und ein korrespondierender Volumenstrom V₂ zur Verfügung gestellt werden.

An die Auswerteeinrichtung 27 ist ein Energiespeicher 30 angekoppelt, der beispielsweise als Akkumulator, Solarzelle, Batterieanordnung oder als Kombination davon ausgeführt sein kann und der die für das Lesegerät 2, die Auswerteeinrichtung 27 und die Stelleinrichtung 28 benötigte Energie zur Verfügung stellt. Mit der Auswerteeinrichtung 27 sind der Kontrollknopf 24 und die Kontrollleuchten 25 verbunden, die für eine Beeinflussung und Anzeige von Betriebszuständen der Bewässerungseinrichtung 3 vorgesehen sind.

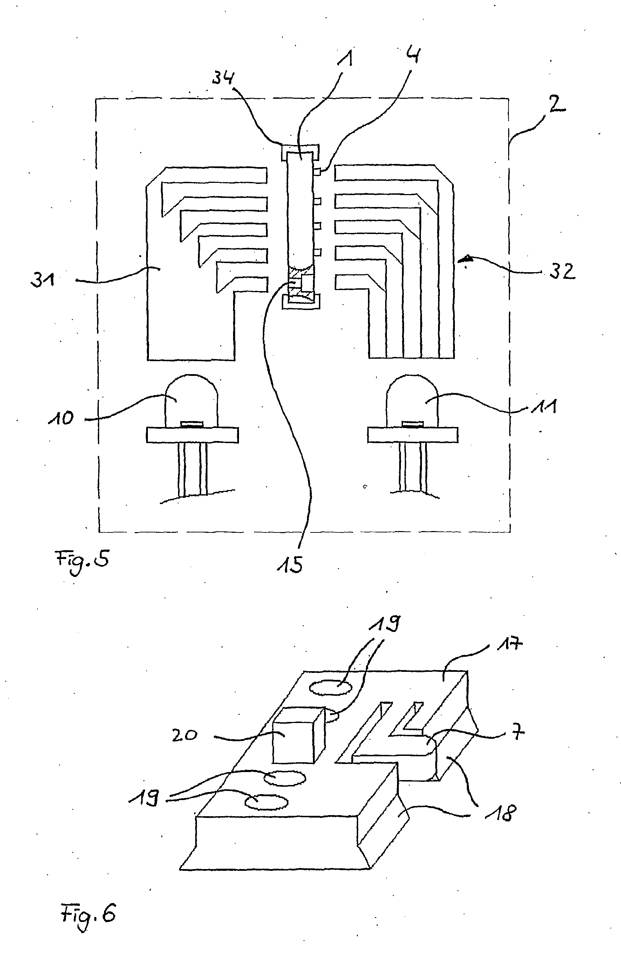

Das in Fig. 5 näher dargestellte Lesegerät weist eine als Leuchtdiode ausgeführte Lichtquelle 10 sowie einen als lichtempfindliche Diode ausgeführten Detektor 11 auf. Die von der Lichtquelle 10 ausgesendeten Lichtstrahlen werden durch einen als Kunststoffspritzgussteil ausgeführten Lichtverteiler 31 entsprechend einer räumlichen Beabstandung der an der Programmiereinrichtung vorgesehenen Codieranordnungen 4 verteilt und von dort in Richtung einer Lichtsammeleinrichtung 32 abgestrahlt. Dabei ist in dem Lesegerät 2 eine Führungseinrichtung 34 für die Programmiereinrichtung 1 vorgesehen, die eine orthogonale Bewegung der Programmiereinrichtung 1 relativ zum Lichtverteiler 31 und zu der Lichtsammeleinrichtung 32 sicherstellt. Die Lichtsammeleinrichtung 32 sammelt von dem Lichtverteiler 31 ausgehende und durch die Programmiereinrichtung an Aussparungen 15 hindurchtretende Lichtstrahlen und führt sie in Richtung des Detektors 11. Zu diesem Zweck ist die Lichtsammeleinrichtung 32 dem Lichtverteiler 31 gegenüberliegend angeordnet. Der Detektor 11 kann bei Auftreffen von Lichtstrahlen ein elektrisches Potential schalten und kann somit in der verbundenen Auswerteeinrichtung 27 ein Impulsmuster auslösen, das seinerseits als Programmierbefehl interpretiert wird.

Für eine Unterscheidung von Programmierwerten, die durch die Stellung der Stellelemente 5 an den Codieranordnungen 4 der Programmiereinrichtung 1 vorgegeben sind, durch den einzigen Detektor 11 und die nachgeschaltete Auswerteeinrichtung 27 können beispielsweise unterschiedliche Farben, Polarisationen, Laufzeiten oder andere zusätzliche Informationen genutzt werden. Derartige Einflüsse auf die übertragenen Lichtstrahlen können insbesondere in dem Lichtverteiler 31 und in der Lichtsammeleinrichtung 32 hervorgerufen werden.

Das in Fig. 6 näher dargestellte Stellelement 5 weist für eine formschlüssige Aufnahme in der Führungsbahn 6 einen von einem plattenförmig ausgeführten Basiselement 17 ausgehenden, keilförmigen Fortsatz 18 auf. An dem Basiselement 17 ist weiterhin ein biegeelastisch beweglich gelagertes Rastmittel 7 vorgesehen. Das Rastmittel 7 ist für einen formschlüssigen Eingriff in nicht dargestellte, zahnförmige Berandungen der Führungsbahn 6 vorgesehen und kann somit eine Positionierung des Stellelements 5 in vorgegebenen Codierpositionen der Codieranordnungen 4 bewirken. Das Stellelement 5 weist weiterhin mehrere Durchbrüche 19 auf, die in ihrer Anordnung an dem Basiselement 17 auf die Anordnung der äquidistant angeordneten Aussparungen 15 der jeweiligen Codieranordnung 4 der Programmiereinrichtung 1 abgestimmt sind. Zwischen zwei Durchbrüchen 19 ist an dem Stellelement 5 ein hervorspringender Betätigungsknopf 20 vorgesehen, der für eine Bedienung des Stellelements 5 ausgebildet ist. Der Betätigungsknopf 20 ist derart an dem Basiselement 17 angebracht, dass zumindest eine in der jeweiligen Codieranordnung 4 vorgesehene Aussparung 15 des Grundkörpers 14 zumindest vorübergehend durch das Stellelement 5 verschlossen werden kann.

Für eine Programmierung der Bewässerungseinrichtung 3 nimmt ein Benutzer zunächst eine Einstellung der Stellelemente 5 der Programmiereinrichtung 1 vor. Dazu werden die Stellelemente längs der Führungsbahnen 6 der Codieranordnungen 4 derart verschoben, dass die jeweiligen Betätigungsknöpfe 20 auf Höhe der gewünschten, auf der Programmiereinrichtung 1 angebrachten Skalenwerte positioniert sind. Sobald alle gewünschten Einstellungen an der Programmiereinrichtung 1 vorgenommen sind, kann diese in den Einsteckschacht 23 des Lesegerätes 2 der Bewässerungseinrichtung 3 eingeschoben werden. Eine Abtastung der Programmiereinrichtung 1 durch das Lesegerät 2 erfolgt in vorteilhafter Weise bei einem Herausziehen der Programmiereinrichtung 1 aus dem Einsteckschacht 23 des Lesegerätes 2. Um einen entsprechenden Abtastvorgang auszulösen, kann in dem Lesegerät 2 ein nicht dargestellter Endschalter vorgesehen sein, der bei einem vollständigen Einschieben der Programmiereinrichtung 1 in das Lesegerät eine Aktivierung der Lichtquelle 10 und der Detektor 11 für einen begrenzten Zeitraum hervorruft, während dessen ein Entnehmen der Programmiereinrichtung 1 aus dem Lesegerät 2 zu erwarten ist. Ergänzend oder alternativ kann auch der Kontrollknopf 24 für eine Aktivierung des Lesegerätes benutzt werden, so dass die Programmierkarte auch abgetastet werden kann, sobald der Benutzer den Kontrollknopf 24 bedient.

Beim Entnehmen der Programmiereinrichtung 1 aus dem Einsteckschacht 23 werden die Codieranordhungen 4 durch die von der Lichtquelle 10 über den Lichtverteiler 31 ausgesendeten Lichtstrahlen beleuchtet. Die gegenüberliegend angeordnete Lichtsammeleinrichtung 32 empfängt die durch die Aussparungen 15 und ggf. Durchbrüche 19 der jeweiligen Codieranordnungen 4 hindurchtretenden Lichtstrahlen, sofern kein Stellelement 5 die entsprechende Aussparung 15 verschließt. Eine Unterscheidung der Codieranordnungen anhand der hindurchtretenden Lichtstrahlen kann beispielsweise durch deren Lichtstärke, Polarisation, Farbe oder anhand anderer optischer Eigenschaften erfolgen. Damit ist der Detektor 11 in der Lage, eine parallele Abtastung aller Codieranordnungen 4 vorzunehmen. Durch die Beleuchtung des Detektors 11 werden in der Auswerteinrichtung 27 Schaltimpulse ausgelöst, die durch einen vorgebbaren Algorithmus interpretiert und in Programmierbefehle für die Bewässerungseinrichtung übersetzt werden. Anhand der in der Referenzspur 40 vorgesehenen Aussparungen 15 wird in dem Lesegerät 2 jeweils ein Triggersignal erzeugt, das zu einer Abfrage der Detektoren 11 der einzelnen Codieranordnungen 4 führt. Anhand der Referenzspur 40 ist das Lesegerät 2 in der Lage, zu unterscheiden, ob ein Signal von den Codieranordnungen 4 erwartet werden kann oder ein Auftreten eines Signals nicht zu erwarten ist, da sich keine Aussparungen 15 im Erfassungsbereich der Detektoren 11 befinden. Durch die Abtastung der Programmiereinrichtung können beispielsweise Informationen über die Uhrzeit, den Zeitpunkt der Bewässerung, die Dauer und die Wiederholungsfrequenz der Bewässerung vorgegeben werden.

Bei dem in der Fig. 7 näher dargestellten Lesegerät 2b sind eine Lichtquelle 10b sowie mehrere Detektoren 11b vorgesehen. Die von der Lichtquelle 10b ausgesendeten, nur exemplarisch für einen der Detektoren 11b dargestellten Lichtstrahlen 41b werden durch einen als Kunststoffspritzgussteil ausgeführten Lichtverteiler 31b entsprechend einer räumlichen Beabstandung der an der Programmiereinrichtung vorgesehenen Codieranordnungen 4b verteilt und von dort in Richtung der Detektoren 11b abgestrahlt. Zu diesem Zweck weist der Lichtverteiler 31b mehrere, exakt zueinander ausgerichtete, optisch wirksame Flächen auf, die für eine Umlenkung und Verteilung der von der Lichtquelle 10b ausgesendeter, nicht näher dargestellter Lichtstrahlen vorgesehen sind. An den optisch wirksamen Flächen des Lichtverteilers 31b findet eine Totalreflektion des auftreffenden Lichts statt, so dass eine verlustarme Lichtlenkung durch den Lichtverteiler 31b gewährleistet ist.

Der Lichtverteiler 31b ist mit einer Führungseinrichtung 34b für die Programmiereinrichtung 1 versehen und für eine Weiterleitung der durch die Programmiereinrichtung hindurchtretenden Lichtstrahlen bis hin zu den Detektoren 11b ausgebildet. Die Führungseinrichtung 34b ist derart in den Lichtverteiler 31b integriert, dass dieser einen Querschnitt der Programmiereinrichtung 1 voll umschließen kann und somit eine vorteilhafte Führung sowie eine hohe Stabilität aufweist. Dadurch bildet der Lichtverteiler 31b auch eine schützende Schicht gegen die Einwirkung äußerer Einflüsse wie beispielsweise Verschmutzungen, für die Detektoren 11b, wodurch sich die Langelebigkeit des Lesegerätes 2b erhöhen lässt. Einzeine elektronische Bauteile oder Baugruppen auf der Steuerplatine 39b können spritzwassergeschützt oder wasserdicht ausgebildet sein, dadurch sind geringere Anforderungen an ein Gehäuse der Bewässerungseinrichtung 1b zu stellen.

Die Lichtquelle 10b und die Detektoren 11b sind auf einer gemeinsamen Steuerplatine 39b angebracht, wodurch eine präzise Positionierung zueinander sichergestellt ist. Über Führungsbohrungen und korrespondierende Führungszapfen der Steuerplatine 39b ist der Lichtverteiler 31b gegenüber den Detektoren 11b und der Lichtquelle 10b toleranzarm positioniert. Auf der Steuerplatine 39b sind nicht näher dargestellte, elektrische und elektronische Bauteile für eine Verarbeitung der von den Detektoren 11b zur Verfügung gestellten Signale bzw. Schaltimpulse vorgesehen. Die elektrischen und elektronischen Bauteile sind auch für.eine Speicherung der von der Programmiereinrichtung übertragenen Programmierbefehle sowie für die Umsetzung in Steuersignale für die Ansteuerung des nicht näher dargestellten, elektromechanischen Steuerventils vorgesehen. In einer nicht dargestellten Ausführungsform ist der Lichtverteiler für eine Aufnahme weiterer elektrischer und/oder elektronischer Bauteile wie beispielsweise einer Batterie zur Stromversorgung des Lesegerätes ausgestattet. Dadurch kann eine besonders einfache Aufbauweise des Lesegerätes sichergestellt werden.

In einer weiteren, nicht dargestellten Ausführungsform der Erfindung kann vorgesehen sein, dass an der Bewässerungseinrichtung zusätzliche Bedienelemente und gegebenenfalls eine Anzeigevorrichtung vorhanden sind. Die Bedienelemente erlauben eine Programmierung nach herkömmlicher Art, so dass die Bewässerungseinrichtung alternativ oder ergänzend zu der Programmiereinrichtung mit den Bedienelementen programmiert werden kann. Ohne das Vorhandensein solcher Bedienelemente an der Bewässerungseinrichtung kann der Benutzer die Programmiereinrichtung gezielt entfernen, um eine unerwünschte Programmierung durch Dritte zu verhindern.

In einer weiteren, nicht dargestellten Ausführungsform ist eine Steuerplatine vorgesehen, auf der für jede abzutastende Codiereinrichtung und für die Referenzspur eine Anordnung aus jeweils einer Lichtquelle und einem gegenüberliegend angeordneten Detektor vorgesehen ist. Zwischen den Lichtquellen und den Detektoren ist in der Steuerplatine eine Aussparung vorgesehen, die für die Hindurchführung der Programmiereinrichtung ausgebildet ist. Durch die Anordnung der Lichtquellen und Detektoren auf einer gemeinsamen Steuerplatine kann eine präzise Positionierung und Ausrichtung der Lichtquellen und Detektoren zueinander verwirklicht werden. Für eine Reduzierung von Störeinflüssen zwischen den einzelnen Lichtquellen bzw. Detektoren können Abschirmmittel, beispielsweise Lichtleitbleche, vorgesehen werden.

## Patentansprüche

1. Lesegerät für eine programmierbare Bewässerungseinrichtung mit einer Sendeeinrichtung (10, 10b) und einer Empfangseinrichtung (11, 11b) zur parallelen optischen Abtastung mehrerer Codieranordnungen einer Programmiereinrichtung, mit zumindest einem Grundkörper, an dem für eine Codierung der Benutzereinstellung zumindest eine individuell einstellbare Codieranordnung vorgesehen ist, die durch das Lesegerät erfassbar ist **dadurch gekennzeichnet, dass** die Sendeeinrichtung eine einzige Lichtquelle aufweist.

2. Lesegerät nach dem Oberbegriff des Anspruchs 1 oder nach Anspruch 1, **dadurch gekennzeichnet, dass** die Empfangseinrichtung einen einzigen Detektor aufweist.

3. Lesegerät nach Anspruch 1 oder 2, **dadurch gekennzeichnet, dass** für eine parallele Abtastung mehrerer Codieranordnungen zumindest ein öptischer Verteiler (12, 12b) an der Sende- und/oder Empfangseinrichtung vorgesehen ist.

4. Lesegerät nach Anspruch 3, **dadurch gekennzeichnet, dass** der optische Verteiler als Lichtleiteranordnung ausgeführt ist.

5. Lesegerät nach Anspruch 3, **dadurch gekennzeichnet, dass** der optische Verteiler als Kunststoffspritzgussteil ausgeführt ist.

6. Lesegerät nach einem der vorhergehenden Ansprüche, **dadurch gekennzeichnet, dass** Mittel zum sukzessiven Erfassen von individuellen Einstellungen der zumindest einen Codieranordnung abhängig von einer Relativbewegung zwischen der Sende- und Empfangseinrichtung und der Programmiereinrichtung vorgesehen sind.

7. Lesegerät nach Anspruch 6, **dadurch gekennzeichnet, dass** die Mittel so ausgebildet sind, dass die Relativbewegung als Entnahmebewegung der Programmiereinrichtung aus dem Lesegerät vorgesehen ist.
